(19) Europäisches Patentamt

European Patent Office

Office européen des brevets

(11) Veröffentlichungsnummer: **0 002 029**

**B1**

(12) **EUROPÄISCHE PATENTSCHRIFT**

(21) Anmeldenummer: **78101329.7**

(51) Int. Cl.³: **F 16 T 1/14, B 60 T 1/00**

(22) Anmeldetag: **08.11.78**

(54) **Entwässerungsventil für Druckluftversorgungsanlagen**

(30) Priorität: **10.11.77 DE 2750263**
**11.08.78 DE 2835304**

(43) Veröffentlichungstag der Anmeldung:
**30.05.79 Patentblatt 79/11**

(45) Bekanntmachung des Hinweises auf die Patenterteilung:
**06.08.80 Patentblatt 80/16**

(84) Benannte Vertragsstaaten:
**CH FR SE**

(56) Entgegenhaltungen:
**DE - B - 1 154 501**
**DE - B - 1 242 463**
**GB - A - 871 980**

(73) Patentinhaber: **Knorr-Bremse GmbH**
**Moosacher Strasse 80**
**D - 8000 München 40 (DE)**

(72) Erfinder: **Pöllinger, Hans**
**Rainfarnstrasse 65**
**D - 8000 München 45 (DE)**
**Huber, Erich**
**c/o Industria Freios Knorr Ltda. Caixa Postal 7679**
**Sao Paulo**
**Capital (BR)**
**Stieninger, Klaus**
**Fürstenackerstrasse 38**
**D - 8000 München (DE)**

Courier Press, Leamington Spa, England.

## Entwässerungsventil für Druckluftversorgungsanlagen

Die Erfindung betrifft ein Entwässerungsventil für Druckluftversorgungsanlagen insbesondere von Fahrzeug-Druckluftbremsen, mit einem eine Wassersammelkammer und eine Betätigungsvorrichtung beinhaltenden Gehäuse, wobei die Betätigungsvorrichtung einen von Druckluftimpulsen gegen Federkraft beaufschlagbaren Steuerkolben aufweist, welcher in einer ersten, fehlenden Druckluftimpuls entsprechenden Schaltstellung eine erste, nahe dem Kondensateintritt in das Gehäuse angeordnete Absperreinrichtung zwischen einer Eingangsöffnung und der Wassersammelkammer geöffnet sowie eine zweite, nahe dem Kondensat austritt angeordnete, als Schieberventil ausgebildete Absperreinrichtung geschlossen und in einer zweiten, vorhandenem Druckluftimpuls entsprechenden Schaltstellung die erste und die zweite Absperreinrichtung in vertauschten Stellungen hält.

Mit der DT—AS 1 675 415 ist ein Entwässerungsventil der vorstehend genannten Art bekannt geworden, bei welchem die zweite Absperreinrichtung als Rundschieberventil mit einem mit dem Steuerkolben verbundenen Rundschieber und einem diesen umfassenden, gehäusefesten Dichtring ausgebildet ist. Der Rundschieber ist hierbei in einem Abschnitt seiner Längserstreckung, welcher nur in der zweiten Schaltstellung in den Bereich des zu ihm gleichachsigen Dichtringes gelangt, mit Längsnuten versehen, durch welche in dieser zweiten Schaltstellung das Kondensat aus der Wassersammelkammer am Dichtring vorbei zur Atmosphäre abfließen kann. Bei diesem Abfließen können im Kondensat befindliche Feststoffpartikel die frei vor der Längsnut befindliche Dichtfläche des Dichtringes beschädigen. Außerdem ergeben sich im Bereich der Seitenkanten der Längsnut örtlich hohe Flächenpressungen zwischen dem Dichtring und dem Rundschieber, welche während des Einführens der Längsnut in den Dichtring einen örtlich übermäßig großen Verschleiß der Dichtfläche des Dichtringes bewirken können. Die beiden vorerwähnten Gegebenheiten führen zu einer alsbaldigen Undichtheit der zweiten Absperreinrichtung in der ersten Schaltstellung des Entwässerungsventils, in welcher der Dichtring an einem längsnutfreien Abschnitt des Kolbenschiebers anliegt und die erste Ventileinrichtung geöffnet ist. In der ersten, mitunter längere Zeit anstehenden und eine Art Ruhestellung darstellenden Schaltstellung kann das bekannte Entwässerungsventil somit alsbald, bereits nach kurzer Betriebszeit, eine Undichtigkeit aufweisen, welche zu einem ständigen Druckluftverlust aus der Druckluftversorgungsanlage führt.

Es ist Aufgabe der Erfindung, ein Entwasserungsventil der eingangs genannten Art mit einfachen Mitteln derart auszubilden, daß es auch bei mit Feststoffen versetztem Kondensat über lange Betriebszeiten sicher und wartungsfrei zu arbeiten vermag.

Diese Aufgabe wird nach der Erfindung dadurch gelöst, daß der Schieber als eine Durchbrechung aufweisender Flachschieber ausgebildet ist, an dessen ebener, die Mündung der Durchbrechung aufweisender Schieberfläche eine Stirnfläche eines im Gehäuse mit zur Schieberfläche senkrechter Achsrichtung gehaltenen, ringförmigen Dichtkörper elastisch angedrückt ist, daß der Innenraum des Dichtkörpers in ständiger Verbindung zur Wassersammelkammer und die Durchbrechung in ständiger Verbindung zur Atmosphäre stehen, und daß die Stirnfläche des Dichtkörpers in der ersten Schaltstellung an einer geschlossenen Stelle der Schieberfläche anliegt und in der zweiten Schaltstellung die Durchbrechung umschließt.

Durch diese Ausbildung liegt in beiden Schaltstellungen die stirnseitige Dichtfläche des Dichtringes vollständig an der Schieberfläche mit überall gleicher Pressung an, weist also keine Stellen auf, welche einem besonderen Verschleiß oder einer besonderen Beanspruchung unterworfen werden. Während des Schaltvorganges gleitet die Schieberfläche an der Stirnfläche des Dichtringes vorbei, wobei an ihr haftende Kondensatreste abgestreift werden und sie somit gereinigt wird. In seltenen Fällen kann es vorkommen, daß ein Kondensatpartikel zwischen die Schieberfläche und die Stirnfläche des Dichtringes gelangt; die beim Arbeiten des Entwässerungsventils auftretende Verschiebung zwischen diesen beiden Flächen entfernt das Kondensatpartikel jedoch alsbald wieder von der Stirnfläche des Dichtringes, so daß dieses wieder dicht auf der Schieberfläche aufzuliegen vermag. Das Schieberventil des Entwässerungsventils weist also eine Art Selbstreinigungseffekt auf, so daß es höchstens für kurze Zeitspannen sich dann wieder selbsttätig behebende, geringe Undichtigkeiten zeigt.

Nach einem weiteren Merkmal der Erfindung ergibt sich eine konstruktiv vorteilhafte Ausbildung des Entwässerungsventils dadurch, daß im Gehäuse ein dem Dichtkörper gleichachsig gegenüberstehender, zweiter, ringförmiger Dichtkörper angeordnet ist, der an eine der Schieberfläche gegenüberliegend angeordnete, zweite, ebene Schieberfläche angedrückt ist, daß die zweite Schieberfläche ebenfalls eine Durchbrechung aufweist, und daß die Durchbrechungen über eine im Körper des Flachschiebers angeordnete, axiale Ausnehmung in Verbindung stehen.

Die einander entgegenwirkenden Andrückkräfte der beiden Dichtkörper bewirken hierbei eine Selbstführung des Flachschiebers, so daß besondere Führungsmittel für diesen entfallen können.

Weiterhin kann es zur guten Führung des Steuerkolbens und Abdichtung des von den Druckluftimpulsen beaufschlagbaren Raumes zweckmäßig sein, zwischen dem Flachschieber und dem wie bekannt gleichachsig zu diesem angeordneten, einen von den Druckluft-impulsen beaufschlagbaren Beaufschlagungs-raum von einem Zylinderraum trennenden Steuerkolben ein diese beiden Teile verbindendes, abgedichtet verschieblich im Gehäuse geführtes Rohrteil einzuordnen, dessen auch den Steuerkolben durchsetzender Innenraum einerseits in die Ausnehmung im Flachschieber und andererseits in den ansonten abgeschlossenen Zylinderraum des Gehäuses mündet. Hierdurch ergibt sich zugleich eine Ent-lüftung des federkraftseitigen Beauf-schlagungsraumes des Steuerkolbens.

Nach weiteren Merkmalen der Erfindung kann sich eine konstruktiv vorteilhafte Ausbildung des Entwässerungsventils ergeben, wenn eine den Zylinderraum abschließende Zwischenwand des Gehäuses von einem axialverschieblichen, abgedichtet geführten Stößel durchbrochen ist, dessen eines, aus dem Zylinderraum herausragendes Ende einen Verschlußkörper der ersten Absperrvorrichtung und dessen anderes, in das Rohrteil eintauchendes Ende einen Anschlagteller aufweist, wenn ein auf dem Stößel verschieblich geführter Ringkörper mit seinem radial inneren Bereich auf den Anschlagteller und mit seinem radial äußeren Bereich auf eine Anschlagfläche am Übergang vom Rohrteil zum Flachschieber aufsetzbar ist, und wenn zwischen jeweils dem Zwischenring und der Zwischenwand bzw. einer Widerlagerfläche am Stößel je eine Druckfeder eingespannt ist.

Ein wartungsfreundlicher Aufbau des Entwässerungsventils ist nach weiteren Merkmalen der Erfindung dadurch erreichbar, daß sich der Flachschieber mit dem Dichtkörpern, das Rohrteil, der Steuerkolben, der Zylinderraum und der Stößel bei vertikaler Achsrichtung des Entwässerungsventils in einem nach oben mit der Gehäusezwischen wand endenden, mit dem restlichen Gehäuse lösbar und dicht verbundenen und aus diesem vertikal nach unten herausnehmbaren Einsatzteil befinden. Bei Herausnehmen des Einsatzteiles sind dann die Dichtflächen des ersten Ventils frei zugänglich und sämtliche Funktionsteile des Entwässerungsventils mit Ausnahme dessen Gehäuses können beispielsweise in Art eines Austauschteiles gewartet werden.

Unter besonders schwierigen Umständen kann es nach der Erfindung schließlich auch zweckmäßig sein, das erste Absperrorgan im wesentlichen gleichartig zum zweiten Absperrorgan als Schieberventil mit einem mit dem Stößel verbunden Flachschieber auszubilden und diesem somit auch die bereits eingangs geschilderten Vorteile zu verleihen.

Um relativ große Fertigungstoleranzen und damit gegebenenfalls bedingte Exzentrizitäten einzelner Bauteile ohne Einbuße an Güte der Dichtheit der Absperreinrichtung zulassen zu können, können nach einem weiteren Merkmal der Erfindung die Dichtkörper in einer quer zur Verschieberichtung des Flachschiebers in Ventilgehäuse bzw. Einsatzteil abgedichtet ver-schieblichen im Mittelabschnitt vom Flach-schieber quer durchgriffenen Patrone in ihrer Längsrichtung elastisch abgestützt angeordnet werden.

Hierdurch wird es den Dichtungskörpern ermöglicht, sich geringen Exzentrizitäten auf-weisenden Flachschiebern anzupassen, wo-durch deren Verklemmen und einseitiger Verschließ unterbunden wird, und andererseits die von den Stirnflächen der Dichtkörper auf die Schieberflächen ausgeübten Anpreßkräfte gleich groß ge halten werden. Durch eine Verlagerung der an den Dichtflächen erforderlichen Vorspannung von den Dichtkörpern auf die elastische Abstützung kann der Werkstoff für die Dichtkörper vorwiegend nach Gesichtspunkten der Verschleißfestigkeit und an untergeordneter Stelle hinsichtlich der Größe seiner Elastizität gewählt werden.

Hierbei läßt sich nach weiteren Merkmalen der Erfindung eine vorteilhafte Ausbildung des Entwässerungsventils dadurch erzielen, daß die Patrone außen zylindrisch ausgebildet ist, und daß jeweils zwischen der der abdichtenden Stirnfläche abgekehrten Ringfläche der Dichtkörper und der Patrone in axialer Richtung vorgespannte Rundschnurringe angeordnet sind.

Weiterhin kann es hierbei nach der Erfindung zweckmäßig sein, wenn zur Abdichtung der Patrone gegenüber dem Ventilgehäuse bzw. dem Einsatzkörper radial vorgespannte Dichtringe, wie z.B. Rundschnurringe in Ringnuten der Innenwand der Ausnehmung des Einsatzkörpers Dichtringe angeordnet sind, und wenn die Patrone mit geringem radialen Spiel in der die Patrone aufnehmenden Ausnehmung verschieblich ist.

Es ist zweckmäßig, die Patrone aus nichtrostendem Werkstoff zu fertigen.

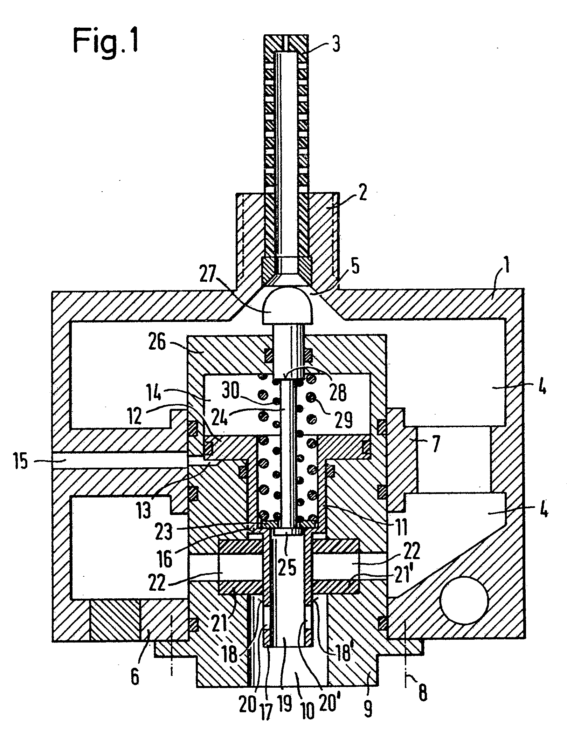

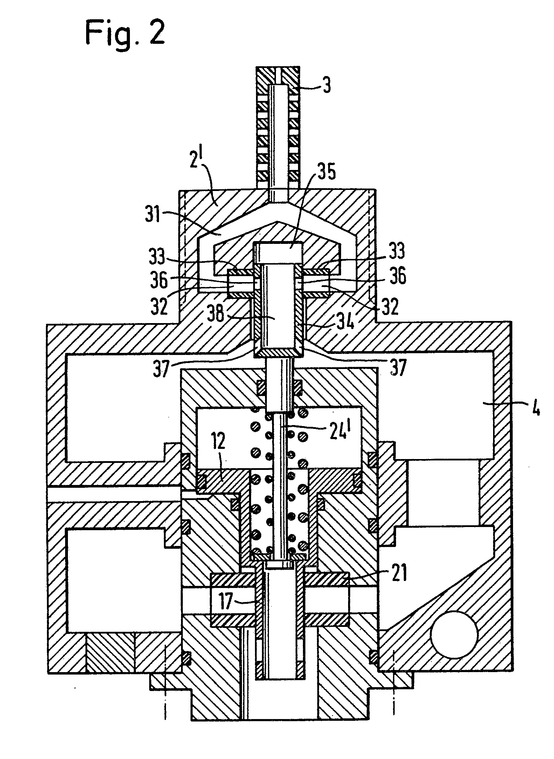

In der Zeichnung Fig. 1 und Fig. 2 sind zwei unterschiedliche Ausführungsbeispiele für nach der Erfindung ausgestaltete Entwässerungsventile dargestellt.

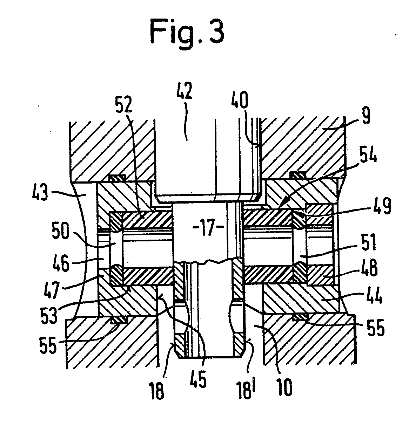

Fig. 3 zeigt in etwas vergrößertem Maßstab eine Einzelheit eines weiteren Ausführungsbeispiels.

Nach Fig. 1 weist das Entwässerungsventil ein Gehäuse 1 auf, welches an seiner Oberseite mit einem Gewindenippel 2 zum Einschrauben in einem nicht dargestellten Druckluftbehälter versehen ist, in welchem sich das auszuscheidende Kondensat ansammelt. Aus dem Gewindenippel 2 ragt nach oben ein Siebansatz 3, welcher grobe Verunreinigungen vom Entwässerungsventil fernhält.

Im Gehäuse 1 befindet sich eine Wassersammelkammer 4, deren Wandung am Kondensateintritt aus dem Gewindenippel 2 bzw. dem Siebansatz 3 zu einem Ventilsitz 5 ausgebildet ist. Der Boden 6 und eine durchbrochene Zwischenwand 7 des Gehäuses 1 sind mit Öffnungen versehen, in welche abgedichtet ein durch Verschraubungen 8 am Gehäuse 1 gehaltenes Einsatzteil 9 eingreift. In einer nach unten zur Atmosphäre offenen Bohrung 10 des Einsatzteiles 9 ist abgedichtet verschieblich Rohrteil 11 gelagert. Das Rohrteil 11 trägt an seinem oberen Ende einen ringförmigen Steuerkolben 12, welcher einen auf Seiten des Rohrteiles 11 befindlichen, ringförmigen Beaufschlagungsraum 13 von einem im Einsatzteil 9 befindlichen Zylinderraum 14 abtrennt. In den Beaufschlagungsraum 13 mündet ein die Zwischenwand 7 durchsetzender und abgedichtet in den Einsatzteil übergehender Steuerkanal 15 ein, welcher von der nicht dargestellten Druckluftversorgungsanlage in üblicher Weise, beispielsweise von deren Druckregler aus, mit Druckluftimpulsen beaufschlagbar ist.

Am unteren Ende des Rohrteiles 11 ist unter Bilden einer Anschlagfläche 16 das obere Ende eines Flachschiebers 17 gehalten. Der Flachschieber 17 weist an gegenüberliegenden Seiten zwei Schieberflächen 18 und 18' auf und er ist in seinem Körper mit einer axialen Ausnehmung 19 versehen, welche nach oben in den Innenraum des Rohrteiles 11 und nach unten in die Atmosphäre mündet. Nahe des unteren Endes ist der Flachschieber 17 mit zwei Durchbrechungen 20 und 20' versehen, welche einerseits in den Schieberflächen 18 bzw. 18' und andererseits in der Ausnehmung 19 münden. Im Einsatzteil 9 sind einander gegenüberstehend zwei ringförmige Dichtkörper 21 und 21' mit zu den Schieberflächen 18 bzw. 18' senkrechter Achsrichtungen derart gehalten, daß ihre Stirnflächen elastisch an die Schieberflächen 18 bzw. 18' angedrückt werden. Die Innenräume 22 der Dichtkörper 21 und 21' stehen über Querbohrungen im Einsatzteil 9 mit der Wassersammelkammer 4 in Verbindung.

Auf der Anschlagfläche 16 liegt ein im Rohrteil 11 verschieblich geführter Ringkörper 23 auf, der verschieblich von einem Stößel 24 durchsetzt ist. Der Stößel 24 endet unterhalb des Ringkörpers 23 mit einen Anschlagteller 25 und durchragt andererseits das Rohrteil 11 sowie den Zylinderraum 14, ist abgedichtet verschieblich in der eine Gehäusezwischenwand bildenden, oberen Abschlußwandung 26 des Einsatzteiles 9 gelagert und endet in der Wassersammelkammer 4 mit einem dem Ventilsitz 5 gegenüberstehenden Ventilverschlußkörper 27. Zwischen der Abschlußwandung 26 bzw. einer durch eine Verstärkung des Stößels 24 im Zylinderraum 14 gebildeten Widerlagerfläche 28 und dem Ringkörper 23 ist je eine Druckfeder 29 bzw. 30 eingespannt.

Im Ruhezustand bei fehlendem Druckluftimpuls nimmt das Entwässerungsventil die in Fig. 1 dargestellte Schaltlage ein. Das aus dem Ventilsitz 5 und dem Ventilverschlußkörper 27 gebildete, erste Absperrorgan ist geöffnet, so daß durch den Siebansatz 3 Kondensat aus dem nicht dargestellten Druckluftbehälter durch den Gewindenippel 2 in die Wassersammelkammer 4 einfließen und sich auf deren Boden 6 ansammeln kann. Der Steuerkolben 12 befindet sich mitsamt dem Flachschieber 17 in der unteren Stellung, in welcher die Dichtkörper 21 und 21' an geschlossenen Schieberflächenabschnitten anliegen und die Durchbrechungen 20 und 20' sich unterhalb der Dichtkörper 21 und 21' befinden.

Gelangt über den Steuerkanal 15 ein Druckluftimpuls in den Beaufschlagungsraum 13, so wird der Steuerkolben 12 gegen den Atmosphärendruck im Zylinderraum 14 unter Kompression der Druckfeder 29 nach oben verschoben. Über die Anschlagfläche 16 wird dabei der Ringkörper 23 mitgenommen und die Druckfeder 30 verschiebt den Stößel 24 aufwärts, bis der Ventilverschlußkörper 27 am Ventilsitz 5 anliegt und somit die erste Absperreinrichtung 5,27 schließt, wodurch die Wassersammelkammer 4 vom Druckluftbehälter abgesperrt wird. Bei weiterer Aufwärtsbewegung des Steuerkolbens 12, wobei nunmehr auch die Druckfeder 30 komprimiert wird, gelangt der über das Rohrteil 11 mit dem Steuerkolben 12 gekuppelte Flachschieber 17 in eine Hubstellung, in welcher die Durchbrechungen 20 und 20' die Stirnflächen der Dichtkörper 21 bzw. 21' überschliefen und in den Bereich von deren Innenräumen 22 gelangen. Aus der Wassersammelkammer 4 kann das angesammelte Kondensat durch die Innenräume 22 der Dichtkörper 21, 21' sowie die Durchbrechungen 20, 20' die Ausnehmung 19 und die Bohrung 10 zur Atomsphäre ablaufen.

Beim Abklingen des Druckluftimpulses im Beaufschlagungsraum 13 drücken die Druckfedern 29 und 30 alle Teile des Entwässerungsventils wieder in die dargestellte Lage zurück, wobei zuerst die Durchbrechungen 20, 20' aus dem Bereich der Dichtkörper 21, 21' nach unten austreten und damit die Wassersammelkammer 4 von der Verbindung zur Atmosphäre absperren und anschließend sich der Ventilverschlußkörper 27 unter Öffnung der ersten Absperreinrichtung 5,27 vom Ventilsitz 5 absenkt.

Die Stirnflächen der Dichtkörper 21, 21' liegen in beiden Schaltstellungen des Entwässerungsventils vollständig an den Schieberflächen 18, 18' mit an ganzen Umfang gleichmäßiger Flächenpressung an und sie werden nicht vom ausfließenden Kondensat umspült. Beim Verschieben des Flachschiebers 17 werden zudem dessen Schieberflächen 18, 18' sowie die an diesen anliegenden Stirnflächen der Dichtkörper 21, 21' unter Abstreifen von etwa vorhandenem Kondensat bzw. Festkörperpartikeln gereinigt. Hieraus ergibt sich eine über lange Betriebszeiten des Entwässerungsventils gute Dichtigkeit des aus dem Flachschieber 17 und den Dichtkörpern 21, 21' gebildeten, zweiten Absperrorgangs 17, 21 und 17, 21'; sollten doch einmal zwischen die Dichtflächen dieses zweiten Absperrorgangs Fremdkörper eingedrungen sein und eine geringe Undichtigkeit bewirken, so werden diese bei den folgenden Arbeitsspielen des Entwässerungsventils selbsttätig von den Dichtflächen entfernt, das heißt, das zweite Absperrorgan regeneriert sich selbst.

Das erste Absperrorgan ist infolge seines Aufbaues relativ unempfindlich gegen Verschmutzungen, da das in das Gehäuse 1 durch den Gewindenippel 2 einströmende Kondensat Feststoffpartikel vom Ventilverschlußkörper 27 bzw. dem Ventilsitz 5 abspült. Außerdem sind hier geringe Undichtheiten infolge der relativ kurzen Standzeiten des Entwässerungsventils in der Stellung mit geschlossenem ersten Absperrorgan unkritisch und können ohne weiteres in Kauf genommen werden.

Es ist jedoch auch möglich, das erste Absperrorgan analog zum zweiten Absperrorgan mit einem Flachschieber auszustatten und somit auch für dieses erste Absperrorgan die vorstehend zum zweiten Absperrorgan geschilderten Vorteile zu erzielen.

Nach Fig. 2 ist der einen vergrößerten Durchmesser aufweisende Gewindenippel 2' in Anschluß an den Siebansatz 3 mit einem gegabelten Kanal 31 versehen, welcher an seinen Enden in die Innenräume 32 zweier einander mit waagrechter Achsrichtung gegenüberstehend angeordneter Ringkörper 33 übergeht. Zwischen die beiden Ringkörper 33 greift mit seinen beidseitigen Schieberflächen ein Flachschieber 34 ein, welcher anstelle des Ventilverschlußkörpers 27 nach Fig. 1 am oberen Ende des Stößels 24' befestigt ist. Der in einer entsprechend geformten Ausnehmung 35 des Gewindenippels 2' verschiebliche Flachschieber 34 ist nahe seines oberen Endes mit zwei Durchbrechungen 36 versehen, welche in der unteren, dargestellten Stellung des Stößels 24' mit den Innenräumen 32 der Ringkörper 33 kommunizieren. Nahe seines unteren Endes ist der Flachschieber 34 mit Öffnungen 37 versehen, welche seinen Innenraum 38 ständig mit der Wassersammelkammer 4 verbinden.

Der übrige Aufbau des Entwässerungsventils nach Fig. 2 entspricht völlig demjenigen nach Fig. 1.

Der Flachschieber 34 stellt zusammen mit den stirnseitig elastisch an ihn angedrückten Ringkörpern 33 das erste Absperrorgan 33, 34 dar, welches bei fehlenden Druckluftimpuls in der in Fig. 2 gezeigten Schaltstellung geöffnet ist: Durch den Siebansatz 3 kann Kondensat durch den Kanal 31, die Innenräume 32 der Ringkörper 33, die Durchbrechungen 36, den Innenraum 38 und die Öffnungen 37 in die Wassersammelkammer 4 gelangen und sich vor dem geschlossenen, zweiten Absperrorgan 17, 21 sammeln.

Bei anstehendem Druckluftimpuls und somit angehobenem Steuerkolben 12 befinden sich die Durchbrechungen 36 in einer zu den Ringkörpern 33 nach oben versetzten Lage und die Ringkörper 33 liegen an einem geschlossenen Wandungsabschnitt der Dichtflächen des Flachschiebers 34. Damit ist das erste Absperrorgan 33, 34 geschlossen und über das, wie zu Fig. 1 beschrieben, geöffnete zweite Absperrorgan 17, 21 vermag das sich in der Wassersammelkammer 4 angesammelte Kondensat zur Atmosphäre auszufließen.

Es ist auch möglich, das Entwässerungsventil nach Fig. 1 oder 2 mit waagrechter Achsrichtung liegend zu betreiben; hierbei ist es jedoch zweckmäßig, insbesondere die Flachschieber dieser Betriebsart konstruktiv anzupassen. Dabei kann es zweckmäßig sein, wenn die Innenräume der Dichtringe ständig an die Atmosphäre und die Durchbrechung des Flachschiebers ständig an die Wassersammelkammer angeschlossen sind.

Beim Ausführungsbeispiel nach Fig. 3 ist der die Absperrvorrichtung umgebende Bereich des Ventilgehäuses als ein Einsatzteil 9 ausgebildet, welches eine Führungsbohrung 40 mit einem Führungsteil 42, an dem ein Flachschieber 17 angesetzt ist, aufweist. Der Flachschieber 17 ragt in eine zur Atmosphäre offene Bohrung 10 des Einsatzteiles 9. Die zu Wassersammelkammern führenden Querbohrungen sind unter Beibehaltung ihrer koaxial gegenüberliegenden und miteinander fluchtenden Lage zu Ausnehmungen 43 erweitert und somit zur Aufnahme einer Patrone 44 ausgebildet. In der Patrone 44 ist eine in Verschieberichtung des Flachschiebers liegende Bohrung 45 mit einem der Bohrung 10 entsprechenden Durchmesser ausgebildet, wobei der dem Führungsteil 42 zugekehrter Abschnitt zur Aufnahme des Führungsteiles 42 mit ausreichendem Spiel erweitert ist. In ihrer Längsachse ist die Patrone 44 von einer Querbohrung 46 mit einer Erweiterung 53 durchsetzt, deren einer der Wassersammelkammer zugekehrter Endberich eine Einschnürung 47 aufweist, während in dem anderen ebenfalls der Wassersammelkammer zugekehrten Endabschnitt ein durchbohrtes Verschlußstück 48 gegen einen festen Anschlag 49 fest einsetzbar ist. Innerhalb der Erweiterung 53 liegt an der Einschnürung 47 von innen ein Rundschnurring 50 und an dem Verschlußstück 48 ein weiterer Rundschnurring 51 an.

Zwischen dem Rundschnurring 50 und einer Schieberfläche 18 des Flachschiebers 17 und zwischen dem Rundschnurring 51 und der zweiten Schieberfläche 18' des Flachschiebers 17 ist je ein ringförmiger Dichtkörper 52 bzw. 54 angeordnet.

Nach/dem die Patrone 44 im wesentlichen durch Bohrvorgänge erstellt ist, wird sie durch das Verschlußstück 48 verschlossen und z.B. durch Umbördeln hierfür ausgebildeter Randzonen gesichert. Sodann werden von der Mitte her durch die Bohrung 45 zunächst beidseits je ein Rundschnurring 50 bzw. 51, und hiernach je ein ringförmiger Dichtkörper 52 bzw. 54 in die Erweiterung 53 der Querbohrung 46 eingesetzt.

Die derart vorbestückte Patrone 44 wird in die Ausnehmung 43, in deren Wandung je ein Rundschnurring 55 zwecks Abdichtung eingelassen ist, in das Einsatzteil 9 eingeschoben. Durch den zwischen den Stirnflächen der Dichtkörper verbleibenden Raum ist der Flachschieber, dessen Enge ausreichend gebrochene Kanten aufweist, zwischen beide Stirnflächen einfügbar.

Die im Einsatzteil 9 quer zur Flachschieberlängsachse abgedichtet verschiebliche Patrone 44 paßt sich eventuell bestehenden geringen Exzentrizitäten des Führungsteiles 42 oder des an diesem angesetzten Flachschiebers 17 widerstandslos an, so daß der beidseits auf den Flachschieber ausgeübte Anpreßdruck der Stirnflächen der ringförmigen Dichtkörper 52 bzw. 54 gleich groß ist.

Beim Einfügen des Flachschiebers zwischen die Dichtkörper sorgen diese für ein Zusammendrücken der Rundschnurringe 50 bzw. 51, wodurch einerseits die Vorspannung für die dichtende Anpreßkraft und andererseits an dieser Stelle eine einwandfreie Abdichtung der Querbohrung 46 gegenüber der Bohrung 10 gewährleistet ist.

Die Patrone 44 weist gegenüber der Ausnehmung 43 geringes radiales Spiel auf und besitzt keinen metallischen Kontakt mit dem Einsatzteil 9, da sie auf dem Rundschnurring 55 gleitet.

Die Patrone 44 kann aus nicht rostendem Werkstoff bestehen und die Ausnehmung 43 des Einsatzteiles 9 kann z.B. eine durch Eloxieren geschützte Oberfläche aufweisen, so daß Korrosionsvorgänge weitgehendst ausgeschaltet sind.

## Patentansprüche

1. Entwässerungsventil für Druckluftversorgungsanlagen insbesondere von Fahrzeug-Druckluftbremsen, mit einem eine Wassersammelkammer und eine Betätigungsvorrichtung beinhaltenden Gehäuse, wobei die Betätigungsvorrichtung einen von Druckluftimpulsen gegen Federkraft beaufschlagbaren Steuerkolben aufweist, welcher in einer ersten fehlendem Druckluftimpuls entsprechenden Schaltstellung eine erste, nahe dem Kondensateintritt in das Gehäuse angeordnete Absperreinrichtung zwischen einer Eingangsöffnung und der Wassersammelkammer geöffnet sowie eine zweite, nahe dem Kondensataustritt angeordnete, als Schieberventil ausgebildete Absperreinrichtung geschlossen und in einer zweiten, vorhandenem Druckluftimpuls entsprechenden Schaltstellung die erste und die zweite Absperreinrichtung in vertauschten Stellungen hält, dadurch gekennzeichnet, daß der Schieber als eine Durchbrechung (20) aufweisender Flachschieber (17) ausgebildet ist, an dessen ebener, die Mündung der Durchbrechung (20) aufweisender Schieberfläche (18) eine Stirnfläche eines im Gehäuse mit zur Schieberfläche (18) senkrechter Achsrichtung gehaltenen, ringförmigen Dichtkörpers (21) elastisch angedrückt ist, daß der Innenraum (22) des Dichtkörpers (21) in ständiger Verbindung zur Wassersammelkammer (4) und die Durchbrechung (20) in ständiger Verbindung zur Atmosphäre stehen, und daßa die Stirnfläche des Dichtkörpers (21) in der ersten Schaltstellung an einer geschlossenen Stelle der Schieberfläche (18) anliegt und in der zweiten Schaltstellung die Durchbrechung (20) umschließt.

2. Entwässerungsventil nach Anspruch 1, dadurch gekennzeichnet, daß im Gehäuse (1) ein dem Dichtkörper (21) gleichachsig gegenüberstehender, zweiter ringförmiger Dichtkörper (21') angeordnet ist, der an eine der Schieberfläche (18) gegenüberliegend angeordnete, zweite ebene Schieberfläche (18') angedrückt ist, daß die zweite Schieberfläche (18') ebenfalls eine Druchbrechung (20') aufweist, un daß die Durchbrechungen (20, 20') über eine im Körper des Flachschiebers (17) angeordnete, axiale Ausnehmung (19) mit der Atmosphäre in Verbindung stehen.

3. Entwässerungsventil nach Anspruch 2, dadurch gekennzeichnet, daß sich zwischen dem Flachschieber (17) und dem wie bekannt gleichachsig zu diesem angeordneten, einen von den Druckluftimpulsen beaufschlagbaren Beaufschlagungsraum (13) von einem Zylinderraum (14) trennenden Steuerkolben (12) ein diese beiden Teile verbindendes, abgedichtet verschieblich im Gehäuse (1) geführtes Rohrteil (11) befindet, dessen auch den Steuerkolben (12) durchsetzender Innenraum einerseits in die Ausnehmung (19) im Flachschieber (17) und andererseits in den ansonsten abgeschlossenen Zylinderraum (14) des Gehäuses (1) mündet.

4. Entwässerungsventil nach Anspruch 3, dadurch gekennzeichnet, daß eine den Zylinderraum (14) abschließende Zwischenwand (26) des Gehäuses (1) von einem axialverschieblichen, abgedichtet geführten Stößel (24) durchbrochen ist, dessen eines, aus dem Zylinderraum (14) herausragendes Ende einen Verschlußkörper (27) der ersten Absperreinrichtung (5, 27) und dessen anderes, in das Rohrteil (11) eintauchendes Ende einen Anschlagteller (25) aufweist, daß ein auf dem Stößel (24) verschieblich geführter Ringkörper (23) mit seinem radial inneren Bereich auf den Anschlagteller (25) und mit seinem radial äußerna Bereich auf eine Anschlagfläche (16) am Übergang vom Rohrteil (11) zum Flachschieber (17) aufsetzbar ist, und daß zwischen jeweils dem Ringkörper (23) und der Zwischenwand (26) bzw. einer Widerlagerfläche (28) am Stößel (24) je eine Druckfeder (29 bzw. 30) eingespannt ist.

5. Entwässerungsventil nach Anspruch 4, mit vertikaler Achsrichtung, dadurch gekennzeichnet, daß sich der Flachschieber (17) mit den Dichtkörpern (21) das Rohrteil (11), der Steuerkolben (12), der Zylinderraum (14) und der Stößel (24) in einem nach oben mit der Gehäusezwischenwand (26) endenden, mit dem restlichen Gehäuse (1) lösbar und dicht verbundenen und aus diesem vertikal nach unten herausnehmbaren Einsatzteil (9) befinden.

6. Entwässerungsventil nach Anspruch 4, dadurch gekennzeichnet, daß das erste Absperrorgan im wesentlichen gleichartig zum zweiten Absperrorgan (17, 21) als Schieberventil (33, 34) mit einem mit dem Stößel (24') verundenen Flachschieber (34) ausgebildet ist.

7. Entwässerungsventil nach Anspruch 2 bzw. 5, dadurch gekennzeichnet, daß die Dichtkörper (52, 54) in einer quer zur Verschieberichtung des Flachschiebers (17) im Ventilgehäuse (1) bzw. Einsatzteil (9) abgedichtet verschieblichen, im Mittelabschnitt vom Flachschieber (17) quer durchgriffenen Patrone (44) in ihrer Längsrichtung elastisch abgestützt angeodnet sind.

8. Entwässerungsventil nach Anspruch 7, dadurch gekennzeichnet, daß die Patrone (44) außen zylindrisch ausgebildet ist, und daß jeweils zwischen der der abdichtenden Stirnfläche abgekehrten Ringfläche der Dichtkörper (52 bzw. 54) und der Patrone (44) in axialer Richtung vorgespannte Rundschnurringe (50, 51) angeordnet sind.

9. Entwässerungsventil nach Anspruch 8, dadurch gekennzeichnet, daß zur Abdichtung der Patrone (44) gegenüber dem Ventilgehäuse (1) bzw. dem Einsatzkörper (9) radial vorgespannte Dichtringe (55), wie z.B. Rundschnurringe in Ringnuten der Innenwand der Ausnehmung (43) des Einsatzkörpers (9) angeordnet sind, und daß die Patrone (44) mit geringem radialen Spiel in der die Patrone (44) aufnehmenden Ausnehmung (43) verschieblich ist.

10. Entwässerungsventil nach Anspruch 8, dadurch gekennzeichnet, daß die Patrone (44) aus nichtrostendem Werkstoff besteht.

**Claims**

1. Drainage valve for compressed air supply units, more especially of compressed air brakes of vehicles, comprising a housing which includes a water-collecting chamber and an actuating device, the actuating device including a control piston to which compressed air impulses can be admitted against spring force, which piston, in a first switching position corresponding to absence of a compressed air impulse, holds open a first shut-off device arranged between an inlet opening and the water-collecting chamber and near the condensate inlet into the housing, and also holds closed a second shut-off device arranged near the condensate outlet and constructed as a slide valve, and in a second switching position corresponding to the presence of a compressed air impulse, holds the first and the second shut-off devices in changed-over positions, characterised in that the slide valve is constructed as a flat slide valve (17) comprising an opening (20), the valve surface (18) including the mouth of the opening (20) having resiliently pressed thereon one end face of an annular packing member (21) held in the housing axially and perpendicular to the valve surface (18), that the internal space or chamber (22) of the packing member (21) is in permanent communication with the water-collecting chamber (4) and the opening (20) is in permanent communication with the atmosphere, and that the end face of the packing member (21), in the first switching position, bears on a closed area of the valve surface (18) and, in the second switching position, surrounds the opening (20).

2. Drainage valve according to claim 1, characterised in that the second annular packing member (21') coaxially facing the packing member (21) is arranged in the housing (1), which member (21') is urged or pressed on to a second flat valve surface (18') arranged facing or opposite the valve surface (18), that the second valve surface (18') likewise comprises an opening (20') and that the openings (20, 20') are in communication with the atmosphere by way of an axial recess (19) arranged in the body of the flat slide valve (17).

3. Drainage valve according to claim 2, characterised in that, between the flat slide valve (17) and the control piston (12) which, as known, is arranged coaxially with the latter and separates an admission chamber (13) to which compressed air impulses can be admitted from a cylinder chamber (14), there is situated a tubular part (11) which connects these two parts and which is guided for sealed displacement in the housing (1), of which tubular part the internal space also passing through the control piston (12) opens on one side into the recess (19) of the flat slide valve (17) and on the other side into the otherwise closed cylinder chamber (14) of the housing (1).

4. Drainage valve according to claim 3, characterised in that a partition (26) of the housing (1) and closing off the cylinder chamber (4) is penetrated by an axially displaceable plunger (24) guided with a sealed action, one end of said plunger, projecting from the cylinder chamber (14), comprising a closure member (27) of the first shut-off device (5, 27), while the other end, extending into the tubular part (11), comprises an abutment plate (25), that an annular member (23), displaceably guided on the plunger (24), is capable of being fitted with its radially inner zone on to the abutment plate (25) and with its radially outer zone on to an abutment surface (16) at the transition from the tubular part (11) to the flat slide valve (17), and that a compression spring (29 or 30) is fitted between the annular body (23) and the partition (26), and respectively an abutment surface (28) on the plunger (24).

5. Drainage valve according to claim 4, with a vertical axial direction, characterised in that the flat slide valve (17) with the sealing or packing member (21), the tubular part (11), the control piston (12), the cylinder chamber (14) and the plunger (24) are disposed in a fitting component (9) which ends towards the top with the partition (26) of the housing, is releasably and tightly connected to the remainder of the housing (1) and can be extracted in a downward vertical direction from said housing.

6. Drainage valve according to claim 4, characterised in that the first shut-off member is constructed substantially identically with the second shut-off member (17, 21) as a slide valve (33, 34) with a flat slide valve (34) connected to the plunger (24').

7. Drainage valve according to claim 2 or 5, characterised in that the sealing members (52, 54) are elastically supported in their longitudinal direction in a cartridge (44) which is displaceable with a sealing action transversely of the direction of displacement of the flat slide valve (17) in the valve housing (1) and fitting part (9), respectively, and penetrated transversely in the middle section by the flat slide valve (17).

8. Drainage valve according to claim 7, characterised in that the cartridge (44) is made cylindrical on the outside, and that axially pretensioned O-rings (50, 51) are respectively arranged between the annular surface of the sealing members (52 or 54) which is remote from the sealing surface and the cartridge (44).

9. Drainage valve according to claim 8, characterised in that radially pre-tensioned sealing rings (55), such as, for example, O-rings, are arranged in annular grooves of the internal wall of the recess (43) in the fitting member (9) for sealing off the cartridge (44) from the valve housing (1) and the fitting member (9), respectively, and that the cartridge (44) is displaceable with slight radial play in the recess (43) accommodating the cartridge (44).

10. Drainage valve according to claim 8, characterised in that the cartridge (44) consists of rust-proof material.

### Revendications

1. Valve de purge pour des installations d'alimentation à air comprimé notamment de freins à air comprimé de véhicules, du type comportant un boîtier contenant une chambre de collecte de l'eau et un dispositif d'actionnement qui comporte un piston de commande pouvant être chargé par des impulsions d'air comprimé à l'encontre de la force d'un ressort et qui, dans une première position de commutation correspondant à l'absence d'une impulsion d'air comprimé, maintient ouvert un premier dispositif d'arrêt disposé à proximité de l'entrée du condensat dans le boîtier, entre un orifice d'admission et la chambre de collecte de l'eau, et maintient fermé un second dispositif d'arrêt, disposé à proximité de la sortie du condensat et constitué sous la forme d'une valve à tiroir, et, dans une seconde position de commutation correspondant à la présence d'une impulsion d'air comprimé, maintient dans des positions permutées lesdits premier et second dispositifs d'arrêt, caractérisé par le fait que le tiroir est constitué sous la forme d'un tiroir plat (17) possédant un perçage (20), que contre la surface plane (18) dudit tiroir, qui comporte l'embouchure du perçage (20), est pressée élastiquement une face frontale d'un organe annulaire d'étanchéité (21) maintenu dans le boîtier avec une direction d'axe perpendiculaire à ladite surface du tiroir, que l'espace intérieur (22) de l'organe d'étanchéité (21) est en liaison permanente avec la chambre (4) de collecte de l'eau et que le perçage (20) est en liaison permanente avec l'atmosphère, et que la surface frontale de l'organe d'étanchéité (21) est appliquée, dans la première position de commutation, contre une partie fermée de la surface (18) du tiroir et entoure, dans la seconde position de commutation, le perçage (20).

2. Valve de purge suivant la revendication 1, caractérisé par le fait que dans le boîtier (1) est disposé un second organe annulaire d'étanchéité (21), disposé en face du premier organe d'étanchéité (21) et étant coaxial à ce dernier et qui est pressé contre une seconde surface plane (18') du tiroir, disposée en vis-à-vis de la première surface (18) du tiroir, que la seconde surface (18') du tiroir possède également un perçage (20') et que les perçages (20, 20') sont reliés par l'intermédiaire d'un évidement axial (19) ménagé dans le corps du tiroir plat (17).

3. Valve de purge suivant la revendication 2, caractérisé par le fait qu'entre le tiroir plat (17) et le piston de commande (12), disposé comme cela est connu coaxial par rapport au tiroir et séparant un espace de charge (13), pouvant être chargé par les impulsions d'air comprimé, d'une chambre cylindrique (14), est situé un embout tubulaire (11) guidé dans le boîtier (1) d'une façon étanche avec possibilité de déplacement et dont l'espace intérieur, qui s'étend aussi à travers le piston de commande (12), débouche d'une part dans l'évidement (19) situé dans le tiroir plat (17) et d'autre part dans la chambre cylindrique (14) du boîtier (1), qui est par ailleurs fermée.

4. Valve de purge suivant la revendication 3, caractérisé par le fait qu'une paroi intermédiaire (26) du boîtier (1), fermant la chambre cylindrique (14), est traversée par un poussoir (24) guidé de façon étanche avec possibilité de déplacement axial et dont une extrémité, qui fait saillie hors de la chambre cylindrique (14), comporte un organe (17) de fermeture du premier dispositif d'arrêt (5, 27), et dont l'autre extrémité, qui pénètre dans l'embout tubulaire (11), comporte une coupelle de butée (25), qu'un organe annulaire (23) guidé avec possibilité de déplacement sur le poussoir (24) peut être appliqué par sa zone intérieure radiale contre la coupelle de butée (25) et par sa zone extérieure radiale contre une surface de butée (16) située au niveau de la jonction de l'embout tubulaire (11) avec le tiroir plat (17), et qu'entre respectivement l'organe annulaire (23) et la paroi intermédiaire (26) et une surface de contre-butée (28) sur le poussoir sont montés des ressorts de pression respectifs (29; 30).

5. Valve de purge suivant la revendication 4, caractérisée par le fait que le tiroir plat (17) muni des organes d'étanchéité (21), l'embout tubulaire (11), le piston de commande (12), la chambre cylindrique (14) et le poussoir (24) sont situés dans un insert (9) qui se termine vers le haut par la paroi intermédiaire (26) du boîtier, est relié d'une façon étanche et amovible au restant du boîtier (1) et peut être ressorti verticalement par le bas hors de ce dernier.

6. Valve de purge suivant la revendication 4, caractérisée par le fait que le premier organe d'arrêt est réalisé sensiblement de la même manière que le second organe d'arrêt (17, 21) sous la forme d'une valve à tiroir (33, 34) avec un tiroir plat (34) relié au poussoir (24').

7. Valve de purge suivant l'une des revendications 2 ou 5, caractérisée par le fait que les organes d'étanchéité (52, 54) sont disposés dans une cartouche (44), mobile de façon étanche transversalement à la direction de déplacement du tiroir plat (17) dans le boîtier (1) de valve ou dans l'insert (9) et traversée dans sa partie médiane par le troir plat, en étant soutenus élastiquement suivant une direction longitudinale.

8. Valve de purge suivant la revendication 7, caractérisée par le fait que la cartouche (44) est constituée avec une forme extérieure cylindrique et que respectivement entre la surface annulaire des organes d'étanchéité (52; 54), tournée à l'opposé de la surface frontale réalisant l'étanchéité, et la cartouche (44) se trouvent disposées des joints toriques (50, 51) soumis à une contrainte préalable suivant la direction axiale.

9. Valve de purge suivant la revendication 8, caractérisée par le fait que, pour réaliser l'étanchéité de la cartouche (44) par rapport au boîtier (1) de la valve ou à l'insert (9), des bagues d'étanchéité (55) précontraintes radialement, comme par exemple des joints toriques, sont disposées dans des gorges annulaires situées dans la paroi intérieure de l'évidement (43) de l'insert (9), et que la cartouche (44) peut être déplacée avec un faible jeu radial dans l'évidement (43) qui la reçoit.

10. Valve de purge suivant la revendication 9, caractérisée par le fait que la cartouche (44) est constituée en un matériau inoxydable.

# Fig.1

# Fig. 2

# Fig. 3